(19) Europäisches Patentamt
European Patent Office
Office européen des brevets

(11) **EP 4 521 283 A1**

(12) **EUROPEAN PATENT APPLICATION**

(43) Date of publication:
**12.03.2025 Bulletin 2025/11**

(21) Application number: **23195829.9**

(22) Date of filing: **06.09.2023**

(51) International Patent Classification (IPC):
***G06F 21/62*** *(2013.01)*

(52) Cooperative Patent Classification (CPC):
**G06F 21/6254**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mastercard International Incorporated
Purchase, NY 10577 (US)**

(72) Inventors:
• **JOHNSON, Alan
Maldon, CM9 8HW (GB)**
• **RADU, Cristian
1320 Beauvechain (BE)**
• **GALLO, Francesco
8045 Graz (AT)**

(74) Representative: **Keltie LLP
No. 1 London Bridge
London SE1 9BA (GB)**

(54) **TOKENIZATION AND DETOKENIZATION**

(57) A computer-implemented method for tokenization is described. A sensitive datum to be tokenized is received, as is a set of parameters relating to the sensitive datum to be tokenized, The sensitive datum and the set of parameters are encrypted using a field preserving encryption technique to provide a token, wherein the token has the same format as the sensitive datum. A corresponding method of detokenization is also described. Here, a token to be detokenized is received, and set of parameters relating to the sensitive datum to be detokenized are received or recovered. The sensitive datum is then obtained from the token and the set of parameters using a field preserving encryption technique, wherein the token has the same format as the sensitive datum. The methods are performed using a suitably programmed computing system, which is also described.

FIG. 1

**Description**

Field of Disclosure

The present disclosure relates to methods of and systems for tokenization and detokenization.

Background to Disclosure

Tokenization is a technique regularly used in data security for protection of sensitive data elements - it involves the replacement of the sensitive data element with a non-sensitive equivalent, typically with a similar form or format so that it can interact with systems or processes in the same way as the sensitive data element. The token is a reference or identifier that maps back to the sensitive data element through a detokenization process. The mapping from sensitive data element to token uses methods that make a reverse mapping impractical without access to the detokenization process. Detokenization will typically involve the use of a token vault in which tokens are stored against their corresponding sensitive data elements in a secure manner.

Tokenization is widely used in transaction systems, though it is also used in a number of other contexts where personally identifiable information or other sensitive data is used (medical records, official documentation, stock trading and so on). In transaction systems, it is generally used in connection with mobile or other digital payment. A mobile device will typically use a mobile wallet for performing card transactions, with the mobile wallet containing one or more digital cards each representing a user account. A token is attached to each digital card, and it is the token which is used in a transaction with the digital card and not the account number (Primary Account Number - PAN) itself. Once the transaction is submitted for authorization, the payment network detects that a token rather than a PAN has been used, and routes the transaction for detokenization using the token vault so that it can be authorized by or for the cardholder's issuing bank.

Digital cards are now very numerous, and payment networks extend across the whole planet. Token vaults are thus heavily used and contain a large amount of information which needs to be held securely, accessed rapidly, and managed efficiently while the digital card data or the interaction channel data change, or it is deleted. This creates a challenge for effective and timely performance and authorisation of digital transactions.

It would be desirable to address these concerns to enable effective performance of digital transaction systems, and of any other systems in which use of tokenization creates similar issues.

Summary of Disclosure

In a first aspect, the disclosure provides a computer-implemented method for tokenization, comprising a suitable programmed computing system: receiving a sensitive datum to be tokenized; receiving or recovering a set of parameters relating to the sensitive datum to be tokenized; and encrypting the sensitive datum and the set of parameters using a field preserving encryption technique to provide a token, wherein the token has the same format as the sensitive datum.

Using such an approach, the tokenization and detokenization processes can be carried out without token vaults, and with limited need for maintenance of secure information, preserving limited (and expensive) space in hardware security modules. Use of field preserving encryption allows for effective creation of tokens that have the format of the original sensitive data (such as PANs).

In embodiments, the field preserving encryption technique may be adapted to map a first range of numbers pseudo-randomly on to a second range of numbers. Such a mapping of the first range of numbers onto the second range of numbers is adapted to be collision-resistant.

The field preserving encryption technique may use a block cipher using a cryptographic key and a vector derived from the set of parameters.

In one type of embodiment, such a block cipher may operate in cipher block chaining mode and the vector may then be an initialization vector. The block cipher may be an AES cipher, optionally AES-256-CBC.

In another type of embodiment, the block cipher may be a tweakable block cipher and the vector may then be a tweak for the tweakable block cipher. The tweakable block cipher may be the Hasty Pudding Cipher.

In embodiments, the tokenization method may be for providing tokens for use in digitized transactions, and the method may further comprise provisioning the token to a consumer computing device. In such a case, the set of parameters may comprise one or more of ownership parameters, security parameters, and expiry parameters. The set of parameters may comprise parameters adapted to be guaranteed but not encrypted by a user computing device in performance of a digital transaction. In embodiments, this set of parameters does not itself ever leave a secure environment, unlike a token itself which will be provisioned to a user computing device, but is simply identified correctly - based on, for example, established aspects of ownership, security and longevity/expiry - it is used only at original tokenization (and subsequent provisioning) and in detokenization.

In a second aspect, the disclosure provides a computer system having a processor programmed to perform the method of tokenisation of the first aspect.

In a third aspect, the disclosure provides a computing device provisioned with a token provisioned according to the method of embodiments the first aspect relating to provision of tokens for use in digitized transactions.

In a fourth aspect, the disclosure provides a computer-implemented method for detokenization, comprising a suitable programmed computing system: receiving a token to be detokenized; recovering a set of parameters relating to the token to be detokenized; decrypting a sensitive datum from the token and the set of parameters using a field preserving encryption technique, wherein the token has the same format as the sensitive datum.

The field preserving encryption technique may be adapted to map a first range of numbers pseudo-randomly on to a second range of numbers. The mapping of the first range of numbers onto the second range of numbers may be adapted to be collision-resistant.

The field preserving encryption technique may use a block cipher using a cryptographic key and a vector derived from the set of parameters.

In one type of embodiment, such a field preserving encryption technique may involve precomputing intermediate results for use in encrypting the sensitive datum. These intermediate results may comprise encryption results for individual digits from an input field to an encrypted field. These intermediate results may be held in secure storage for use by the detokenization process. In such embodiments, the block cipher may operate in cipher block chaining mode and the vector may be an initialization vector. Such a block cipher may be an AES cipher, optionally AES-256-CBC.

In another type of embodiment, the field preserving encryption technique may only be carried out when a token is received for detokenization. Here, the block cipher may be a tweakable block cipher and the vector may be a tweak for the tweakable block cipher. Such a tweakable block cipher may be the Hasty Pudding Cipher.

In embodiments, the detokenization method may involve detokenizing tokens used in digitized transactions to recover account information for use in authorising the transaction. The set of parameters may then comprise one or more of ownership parameters, security parameters, and expiry parameters. In the first type of embodiment, the set of parameters may then be used in determining the intermediate results. In the second type of embodiment, the set of parameters may comprise parameters guaranteed but not encrypted by a user computing device in performance of a digital transaction. This method may further comprise a guarantor service guaranteeing at least a part of the set of parameters before their use by the field preserving encryption technique.

In a fifth aspect, the disclosure may provide a computer system having a processor programmed to perform the method of detokenisation of the fourth aspect.

Brief Description of the Drawings

Figure 1 shows a general embodiment of a tokenization process according to the disclosure.

Figure 2 shows schematically a distributed transaction architecture using a four-party model;

Figure 3 illustrates elements of a complex distributed system adapted to implement the transaction architecture of Figure 2;

Figure 4 shows schematically an exemplary system for enabling digital transactions in the transaction architecture of Figure 3;

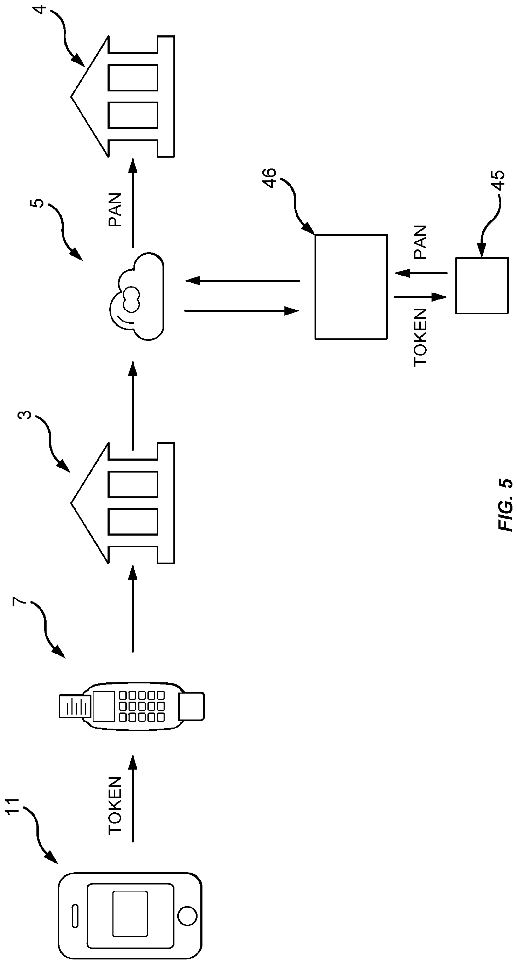

Figure 5 shows the transaction path of a digital contactless transaction according to a conventional tokenization arrangement;

Figure 6 shows the structure of a conventional token;

Figure 7 illustrates an approach to providing an additional parametric input and a random input for cryptographic mechanisms used in embodiments of the disclosure;

Figure 8 shows how a security score may be derived from wallet technology features to provide a parameter for use in encryption in embodiments of the disclosure;

Figure 9 shows an exemplary approach to key derivation to provide an encryption key for use in embodiments of the disclosure;

Figure 10 illustrates a first embodiment of a cryptographic mechanism adapted for use with embodiments of the disclosure in which pre-computation of encryption elements is used;

Figure 11 illustrates a second embodiment of a cryptographic mechanism adapted for use with embodiments of the disclosure in which a tweakable block cipher is used.

Figure 12 provides an alternative presentation of the cryptographic mechanism of Figure 11;

Figure 13 provides alternative representations of a Hasty Pudding Cipher implementation of the cryptographic mechanism of Figures 11 and 12;

Figure 14 shows the operation of the cryptographic mechanism of Figure 13 on an input set to provide an output set; and

Figure 15 shows the use of an authenticator service to provide guaranteed parameter information for the embodiment shown in Figures 11 to 14.

Detailed Description

General and specific embodiments of the disclosure will be described below with reference to the Figures.

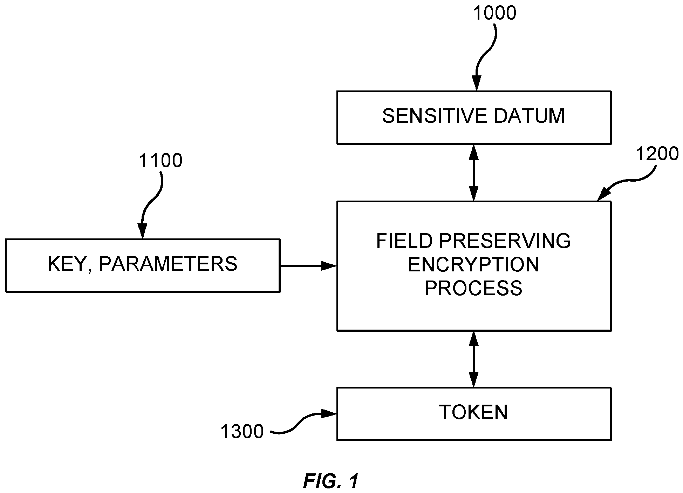

Figure 1 illustrates a general embodiment of tokenization according to the disclosure. A sensitive datum 1000 requires tokenization. This is provided as an input to a field preserving encryption process 1200, along with a set of parameters 1100 relating to the sensitive datum to be tokenized. The result of this process is a token 1300, such that the token has the same format as the sensitive datum. This result may be the whole token 1300 or specific digits of a token - for example, certain digits in the token may be assigned for particular reasons (routing, identification, check digits) but this process is used for a "payload" which forms a central part of the token. The field preserving encryption process 1200 is symmetric in that it allows for detokenization using the token 1300 and the same set of parameters 1100 as inputs. This approach allows for tokenization and detokenization on the fly without the need for large token vaults.

This approach to tokenization and detokenization can be used in a variety of contexts. It is, however, particularly appropriate for use in a main area in which tokenization is used, which is that of digital transactions using payment cards and payment devices. This context will now be described, as will a conventional approach to tokenization for this purpose. Embodiments of the present disclosure will then be described.

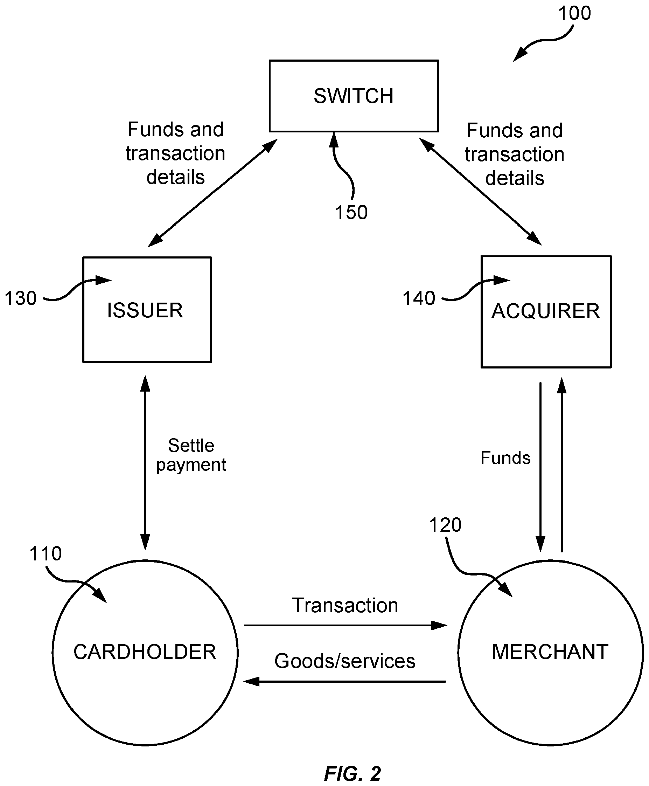

Figure 2 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of an online transaction). Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

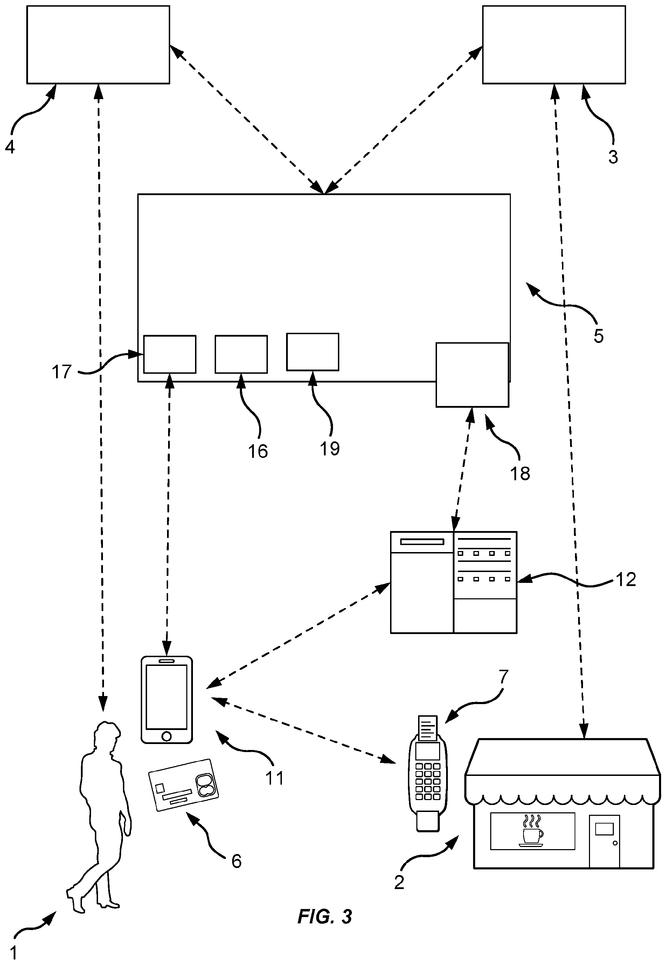

Figure 3 shows an architecture according to an embodiment of the disclosure appropriate for interaction between a cardholder and a merchant. This Figure shows a general-purpose architecture for reference but shows in particular elements of an architecture used when a cardholder carries out an online transaction with a merchant server.

For a conventional transaction, a cardholder 1 will use their payment card 6 - or a mobile computing device such as smartphone 11 adapted for use as a contactless payment device - to transact with a POS terminal 7 of a merchant 2. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use this to transact with a merchant POS terminal 7 using NFC or another contactless technology, or to make a payment in association with its wallet service as discussed below. However, online transactions with a merchant are of particular interest in connection with embodiments of the disclosure, rather than contact or contactless transactions with a merchant POS terminal 7. To make an online transaction, the smartphone 11 may also be able to interact with a merchant server 12 representing the merchant 2 over any appropriate network connection, such as the public internet - the connection to the merchant may be provided by an app or application on the computing device.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision.

Generally, the tokenisation process is carried out by a transaction scheme or an appropriate service provider with the permission of the payment card issuer (the issuing bank with which the cardholder has an account). Tokenised transactions are routed in the transaction scheme so that the primary account number (PAN) associated with the tokenised card can be recovered from a digital vault, also called token vault (TV), allowing normal processing of the transaction. The data associating the issuing bank and the digital wallet provider (or token requestor) where a token is stored is maintained at a data centre within a distributed transaction systems, and can be used to identify at an existing moment tokens associated with a specific issuing bank.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

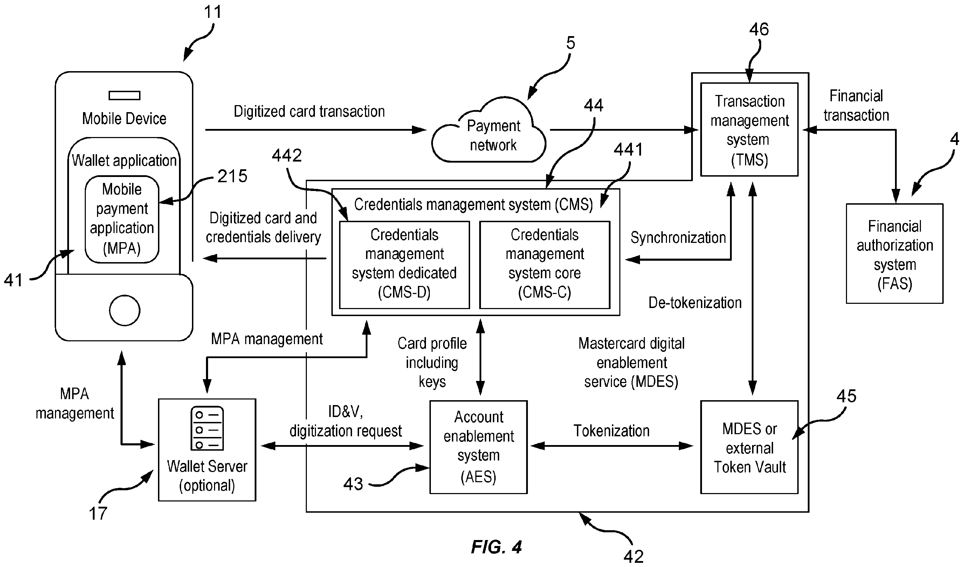

Figure 4 shows elements of a transaction infrastructure to support digitized payments from a mobile device in more detail. This Figure shows as a specific example the applicant's Mastercard Cloud-Based Payment (MCBP) architecture - this is exemplary rather than specific to the disclosure, and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions. The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitization and user establishment. It will interact with the mobile payment application (here through the wallet server 17) for card digitization requests, and it will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45 for detokenization, and tokenization of a card will result in creation of a new entry (Token-PAN) in the Token Vault 45.

Transaction Management System (TMS) 46 is used when processing tokenized transactions. If a transaction is identified by the transaction scheme as being tokenized, it is routed to the TMS 46 which detokenizes the transaction, establishing which PAN corresponds to the current transacted Token, by using the Token Vault 45. The detokenized transaction is then routed based on PAN to the issuer (here represented by Financial Authorisation System 4) for authorisation in the conventional manner. The TMS 46 also interacts with the CMS 44 to ensure synchronisation in relation to the cardholder account and credentials.

Figure illustrates the steps involved in a digital transaction in relation to the use of tokens. A digital transaction is performed - here between a digital card in a mobile wallet of a mobile phone 11 and a point-of-sale terminal 7 in a contactless transaction - using a token in place of the PAN corresponding to the digital card. In order to be able to perform the transaction, the consumer must have authenticated themself as the legitimate owner of the mobile wallet, and will also have selected a digital card from the mobile wallet to be used. If this card is tokenized, this establishes that when the transaction is presented for authorization, it will pass through an appropriate path in the payment network 5 that will lead to detokenization of the token. The transaction is performed between merchant's terminal 7, acquirer processor 3, and payment scheme 5 processor in a similar way to a chip-and-PIN transaction, but with the token performing the role of the PAN. Since the cryptogram produced by 11 is verified by (with referring to Figure 3) TMS of 7 (instead of FAS of the issuer) this means that the token takes the place of the PAN in the material encrypted in the application cryptogram generated by the mobile wallet as non-repudiable proof of the transaction. This cryptogram will also include various details of the payment and associated business conditions, and also a record of cardholder authentication's status on the device 11 (by indication of Consumer Device Cardholder Verification Method - CDCVM's status "True/False").

The transaction passes through the normal path for authorisation - from the point-of-sale terminal 7 through the acquiring bank 3 to the payment network 5. In practice, it will be the acquirer 3 that directs the transaction to the appropriate payment network 5 (based on the BIN number at the start of the token - this is discussed further below), and the payment network 5 will then direct the transaction to the appropriate TMS 46 on determining that the BIN points to a particular Token Range. The transaction management system 46 interacting with the token vault 45 carries out detokenization, here using a detokenization table kept in the token vault where the token and the PAN are stored against each other, the PAN is recovered and the transaction can be authorised by the issuer in the normal manner after the authorization message request has been reconfigured with the PAN taken the place of the Token. Verification of the application cryptogram establishes that the transaction has been initiated by an authentic mobile wallet and one of its stored digital cards, hosted by a secure device, and that the cardholder has approved the transaction (using a CDCVM - such as fingerprint or facial pattern) to do so. The PAN is therefore used as in a normal transaction to indicate to the Issuer the source of funds (and the issuer for authorization of the transaction), but the use of a token "hardens" the PAN (in security terms) against eavesdropping attacks on the contactless channel between mobile phone 11 and the POI contactless terminal 7.

There are a collection of interacting features that are used to provide security for digital payments. Tokenization is used to protect the PAN in transaction channels. A digital card is authenticated to the payment network through application cryptogram verification, and to a point-of-sale terminal through Combined Data Authentication (CDA) through EMV processes (EMVCo provides standardization of processes for payment networks, with standards available from emvco.com). Cardholder verification is provided through a Consumer Device Cardholder Verification Method (CDCVM), and its result is included in the computation of the application cryptogram.

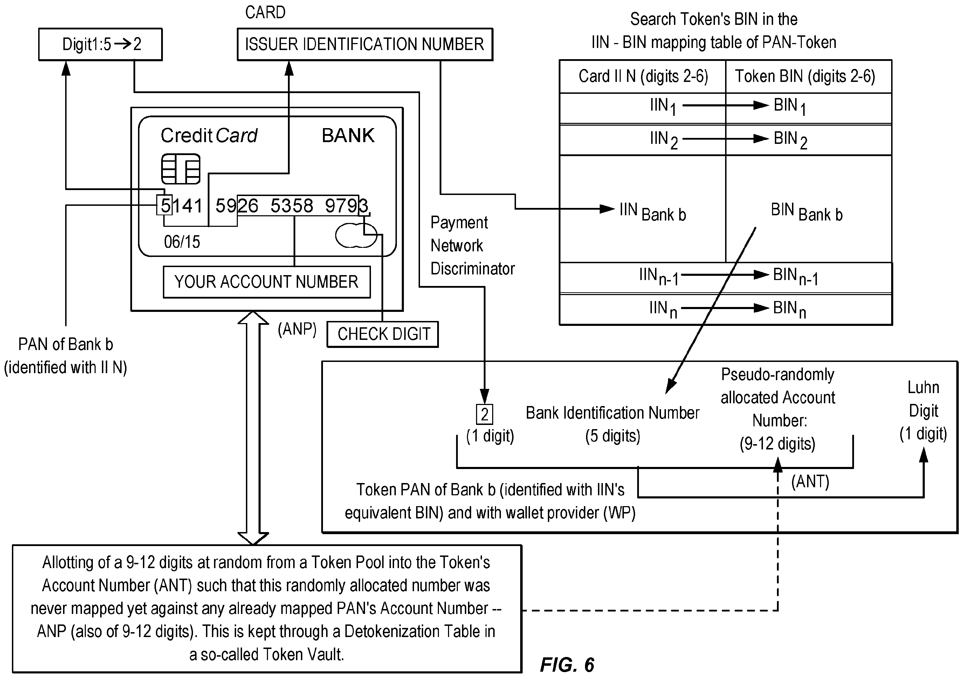

A conventional approach to tokenization will now be described with reference to Figure 6.

The allocation of a token to a PAN uses randomness - strictly, a pseudo-random permutation - in a keyless encryption function for which the encryption and decryption domains are the same, and on allocation of a token, the token is removed from the token pool so that the same token cannot be allocated to two different PANs, to the same PAN in two different devices, or to the same PAN for interaction of the mobile app on two different channels.

|  | Digit 1 | Digits 2-6 | Digits 7-18 (max) | Last Digit (e.g., 19) |
|---|---|---|---|---|
|  | *Payment Scheme Number* | *Issuer/Bank Identification Number (IIN/BIN)* | *Account Number (AN)* | *Luhn Digit* |
| PAN | 5 | IIN | ANP (Account Number of PAN) as written in the physical card's PAN | X |
| Token 1 | 2 | BIN | ANT (Account Number of Token) randomly allocated by MDES with uniqueness for an ANP. | Y |

Table 1 - Digit significance in PAN and conventional EMV token

Table 1 shows how the pseudo-random permutation process of conventional EMV works in generating the digits of a token. This is broken down visually in Figure 6, and explained in more detail below. The first digit is simply a payment scheme number, so that tokens - as for PANs - can immediately be directed into the correct payment scheme without any complexity for the initial routing. The payment scheme will consequently receive only the correct PANs and tokens, and will know which is a PAN and which is a token.

The second tranche of digits from 2-6 identifies the issuing financial institution. In a PAN, this is an Issuer Identification Number (IIN) - these are publicly known numbers. Each scheme provider will have a matching Bank Identification Number (BIN) for a digital card product - these numbers, which are typically not well-known, are distributed by scheme providers to participating financial institutions to allow digitized transactions to be managed through arrangements such as MDES (as described above). While an IIN and a BIN will relate to the same financial institution, they will typically be mapped to different account ranges for payment card products and corresponding digital products.

The third tranche of digits from digits 7-18 (the total number of digits in this field may differ for different card products between 9 and 12 digits) represents an account number for a PAN and an Account Number of Token (ANT) for a token. The generation of an account number is up to an individual issuer and may be determined in a large number of ways (outside the scope of this discussion). An ANT is pseudo-randomly assigned from an Account Number Pool of available ANTs allotted for the equivalent card product's PAN. The mapping between the account number and the corresponding ANT needs to be kept secure, as discussed further below - it also needs to be made unavailable for use by any other PAN (and not to have already been used by another PAN). The final digit of either a card or a token is a Luhn check digit - this is simply calculated over the digits of the PAN or the token using the Luhn algorithm.

In this conventional approach, the mapping between PAN and token is kept in a Token Vault - while some digits of the token can be determined as needed, the mapping between the account number of the PAN and the ANT cannot be. Difficulties of this approach are the need to check on each token allocation that the token has not already been allocated, and need to keep all elements of the PAN to token mapping at a security level appropriate to encrypted data, which is resource consuming and expensive. For a desired security level, this would lead to token vaults needing either to be secured in Hardware Security Modules (HSMs), which is an expensive solution, or to be stored in an encrypted form, which leads to further time consumption with a decryption step, which is significant as this is time added to the processing of a transaction. Moreover, this type of approach does not provide a satisfactory approach for confidentiality of the token (since the owner of the token - the bank or issuer - must rely on the payment scheme provider to hold detokenization information with sufficient security) or for privacy of the token (for similar reasons).

In embodiments of the disclosure, this pseudo-random allocation is replaced by a process in which the ANT is calculated from the account number using a keyed cryptographic mechanism - specifically, one using a Field Preserving Encryption (FPE) technique. Using such a technique, the resulting ANT can preserve the restrictions of the input set of PAN account numbers, and in this way the token can be used the same way as a PAN - specifically here, it can be directly accommodated in the DE2 message field of a 0100-authorization message according to the ISO-8583 standard (or any future equivalent). The token is therefore effective to route the transaction from the merchant's POS to the TSP (as described above for MDES), directly. On arrival at the TSP during a payment authorization transaction, the TSP will unpack the token and decrypt the ANT into the account number of the PAN and recover the PAN, without any need to refer to a detokenization table with a token-PAN mapping. Using this approach the PAN is encrypted to become an ISO-8583 token - a process that can be installed on a mobile device by appropriate personalization or carried out in a token server.

The token in this case is computed rather than assigned, but is still capable of routing the message appropriately during the authorisation process (here, so that it is routed to MDES for decryption). Alternative approaches to implementing Field Preserving Encryption to achieve this will be discussed further below. Using the decrypted PAN, MDES can route the transaction for authorization as for conventional tokenization. This approach therefore allows tokenization and detokenization without any need for a token vault or any other centralized detokenization repository - the amount of information that needs to be kept secure is much more limited. Moreover, there is no need to provide any "blob" of encrypted information - one known solution to passing a PAN securely is to store it in encrypted form in an appropriate "spare" space in transaction information, such as in the Issuer Discretionary Data (IDD) field of File Control Information (FCI). It is highly desirable not to rely on the provision of such a "blob", as this is considered to be a security or privacy risk in many jurisdictions (and is consequently not allowed). This is not an issue if the token is derived from an FPE and has the same general structure as a PAN - it is therefore apparent that it just has the normal functions of a PAN as it would not be possible to encode additional information effectively.

The Cryptographic Mechanism (CM) using FPE should have the following properties:

- Input and Output format is the same;
- Permutation is strictly injective (cryptographically);
- Input for FPE includes only integer numbers (decimal) in finite input interval;
- Permutation has variable mapping formula, rendering it pseudo-random.

These properties are discussed in more detail below.

Input and Output format is the same. This allows the result of transforming the PAN - the token T - to have the same effect as the PAN in routing the transaction over (here) an ISO-8583 payments network, while also protecting the PAN from cross-channel contamination and without requiring modifications to the messaging itself (which would in practice prove a major bar to implementation. The token T therefore has the form:

$$T = 2\|BIN\|ANT\,(9-12\ digits), cryptographically\ computed\|Luhn\ Digit$$

which fits into the DE2 field of authorization messages in the same way as the PAN.

Permutation is strictly injective - This means that collisions should be avoidable - there are not different account numbers ANP (Account Number of PAN) in the input which will lead to the same ANT in the output. Desirably, finding such collisions should be as challenging as breaking the underlying cryptographic primitive on which the cryptographic mechanism (CM) is built.

Input for FPE includes only integer numbers in finite input interval - In one approach, the CM may simply encrypt decimal digits into decimal digits according to the parametric inputs used. This allows pre-computation to be used, allowing tokenization and detokenization to be as computationally efficient and secure as the conventional approach but without the same storage needs. In another approach, there may simply be creation of a positive integer number in a controlled range of ANT (Account Number in Token) for ANP (Account Number in PAN) - this is appropriate for computation on-the-fly, an embodiment of which is described below.

Permutation has variable mapping formula - This variability relies on the parameters employed. These may be of multiple types:

- Processing parameters, e.g.

  ○ Channel type used for cryptogram (face-to-face, remote, contactless, etc.)
  ○ CM for generating permutation (options discussed below)

- Business parameters, e.g.

  ○ Bank Identifier
  ○ Product Identifier or Name

- Operational parameters, e.g.

  ○ Token requestor
  ○ Wallet provider
  ○ Operational security environment...

    ▪ ... for payment app
    ▪ ... for wallet app

- ... for CVM app

○ Type of interaction channel
○ Type of pseudo-random permutation

Alternative encryption mechanisms will now be described - as has been indicated previously, some embodiments may use pre-computation, whereas others may use encryption and decryption on-the-fly. An example of each is described in detail. For an embodiment using pre-computation, a block cipher (such as AES-256) may be used in CBC-mode with independent pre-computation of the cryptograms for each decimal integer number in the set {0, 1, 2, 3, 4, 5, 6, 7, 8, 9} as in the first approach suggested above. For an on-the-fly embodiment, a "tweakable" cipher (using a "spice", here derived from certain input parameters) adapted to provide a pseudo-random cryptographic permutation on a given input set while preserving the format of the input set may be used - this class of "tweakable block ciphers" was identified by Liskov, Rivest and Wagner, and an embodiment is described using one example, the "Hasty Pudding Cipher" (HPC) of Richard Schroeppel. The HPC cipher requires not only the input message and the cryptographic key to produce the output but also a third input, the "tweak." The approach taken by HPC prevents having the same plaintext result in the same ciphertext by bringing the tweak/spice down to the primitive block-cipher level, instead of incorporating it only at the higher modes-of-operation levels. Other tweakable block ciphers exist (e.g. the Korean standard Format-preserving Encryption Algorithm (FEA), NIST's standards FF1 and FF3-1) and could be used in alternative embodiments.

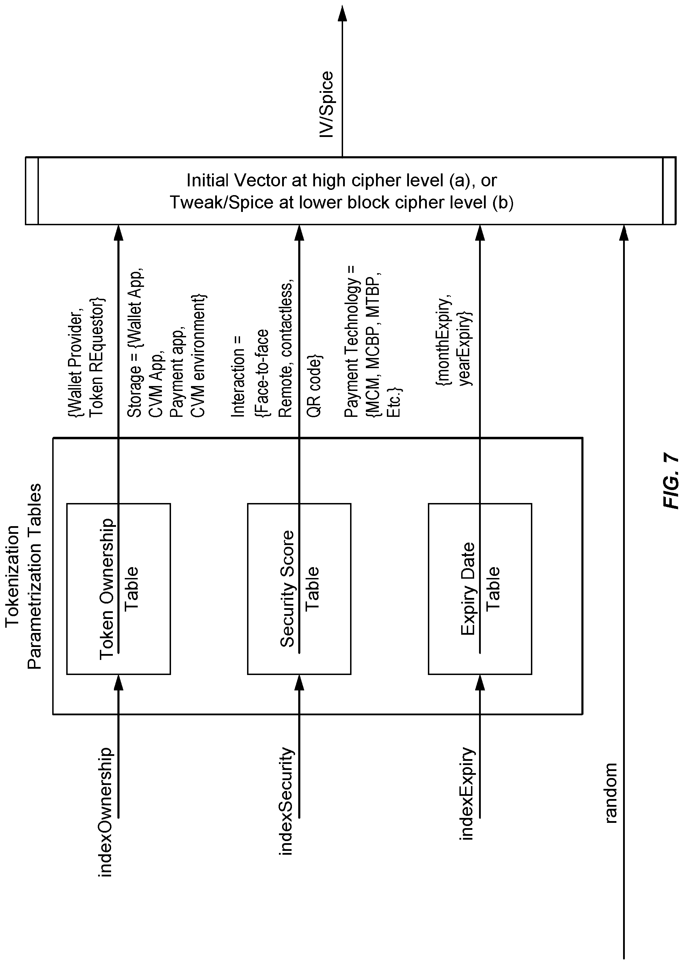

Both of these embodiments require an additional input - the Initial Vector (IV) for AES-256-CBC, the Tweak/Spice for HPC - and these can be provided in the same way using appropriate input parameters, as described below for one exemplary embodiment with reference to Figure 7.

As can be seen in Figure 7, the parameters are here provided through Token Parametrization Tables - these comprise system parameters that must be kept secret in the HSM. These parameters have been used to provide Tokens to devices when a tokenization demand was originally made (the user payment device will not itself perform such calculations - it will simply use a Token that has been provisioned to it). Their content should be updatable by trusted personnel responsible for relevant aspects of the payment network, for example by adding/removing lines while the processing/business/operation configuration of the system changes. However, these changes are performed such that the index to a parameter (such as Ownership, Security Score, Expiry Date, etc....) stays the same, since they are personalized in the Token (as it will be shown). These Tokenization Parametrization Tables should be configurable in any nodes where payment schemes together with concerned TSPs are receiving payment transactions. Exemplary approaches for each parameter are discussed below.

Token Ownership - this table may, for example, have each line encoding a wallet provider identifier, and a token requestor identifier combination. The indexOwnership will be a pointer with four digits specifying the Token Ownership table's line (between 0000 and 9999) number where the server can always retrieve one of the ten thousand combinations representing the (WP_Id, TR_Id) to compute the IV/Spice computation (as per Figure 7).

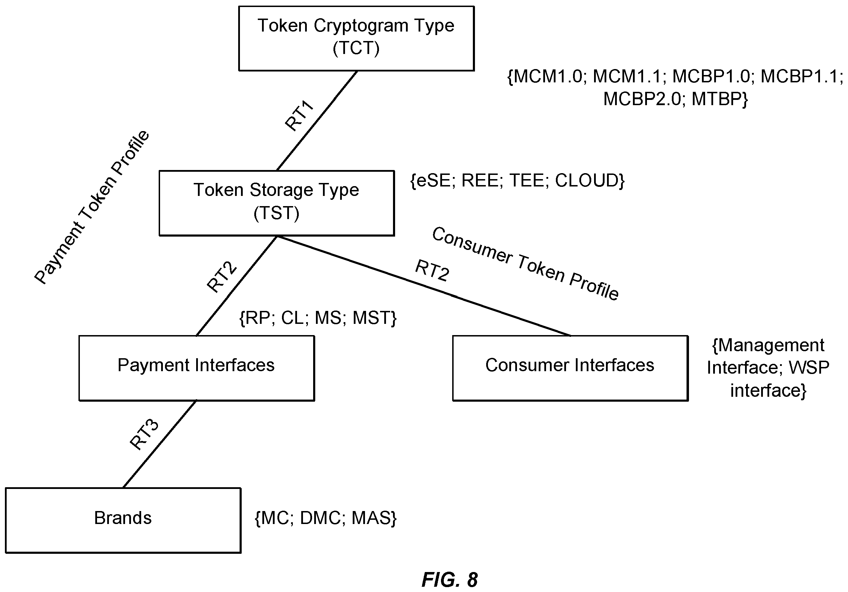

Security Score - this table may, for example, have each line encoding the security features of a mobile wallet and particularly of its component elements, exemplary the following parameters: technology used for international payment, wallet app provider (operator) identifier, wallet app storage type, CVM app storage type, payment app storage type, and the type of the environment used for CVM inserting. Figure 8 shows a parameter tree indicating how these security features may be encoded into an element of the Security Score table, by following a trajectory, and only one, in the parameter tree and the table below.

Table 2 - Wallet Technologies and Security

| Technology used for international payment | Operator | Wallet App | CVM App | Payment app | CVM inserting environment |
|---|---|---|---|---|---|
| MPA (Mobile Payment App) | Apple | REE | SE | SE | TEE with integrated sensors |
| MCBP (Mastercard Cloud-Based Payment App) | Google Wallet App Provider | REE | Cryptographically secured with White Box Cryptography (WBC) | WBC | Cryptographically secured environment with integrated sensors in WBC. |

(continued)

| Technology used for international payment | Operator | Wallet App | CVM App | Payment app | CVM inserting environment |
|---|---|---|---|---|---|
| *MTBP (Master-card Trusted-Based Payment App)* | Samsung | REE | TEE | TEE | TEE with integrated sensors |
| *Two-path MPA* | 5G Mobile Operator | 5G REE | WBC | WBC + Edge 5G Secure Server | TEE with integrated sensors |

The indexSecurity will be a pointer with three digits specifying the Security Score table's line (between 000 and 999) number where the server can always retrieve one of the one thousand combinations representing a security parameter tree path for the device involved in transaction, to compute the IV/Spice computation (as per Figure 7).

Expiry Date - this table may, for example, have each line encoding the month expiry and year expiry combination, on 4 digits: the first two digits encodes the month expiry, and the next two encodes the year expiry. The table should have space enough to encode all combinations from: first month of the current year (at indexExpity = 0000) till the last month of the current year plus hundred year (at indexExpiry = 1299). Nevertheless, each operator has the right to choose the number of years for the validity of the Token (e.g., maximum five years, or maximim 10 years, etc.). If the secure storage space is a problem, a computational economical method can be used: instead of providing an indexExpity, the operator may provide a delta added to a reference date -e.g., when the tokenization transaction of the Token took place -- kept secret by the TSP to get the **actual expiration date.** The experimented reader can find other possible enbodimentd following the same line of reasoning.

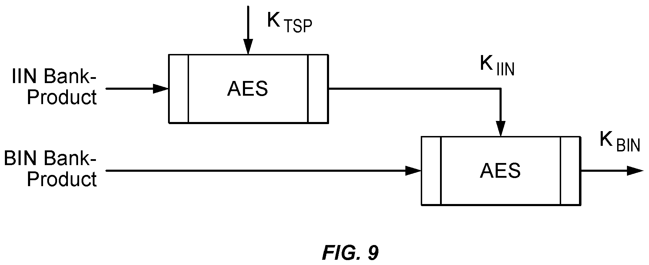

Various approaches can be taken to provide a key for the cryptographic method. One approach, illustrated in Figure 9, is similar to that used for key generation in existing EMV methods. This is to use a master key (here $K_{TSP}$) for the payment network which is then diversified using parameters for the issuer (here to produce $K_{IIN}$) and then for the specific product to produce the key for the cryptographic mechanism (here $K_{BIN}$). Other approaches can be used - for example, a key could be selected pseudo-randomly from a key set specific to a device-TSP channel, with a key list that is unique and specific to the channel.

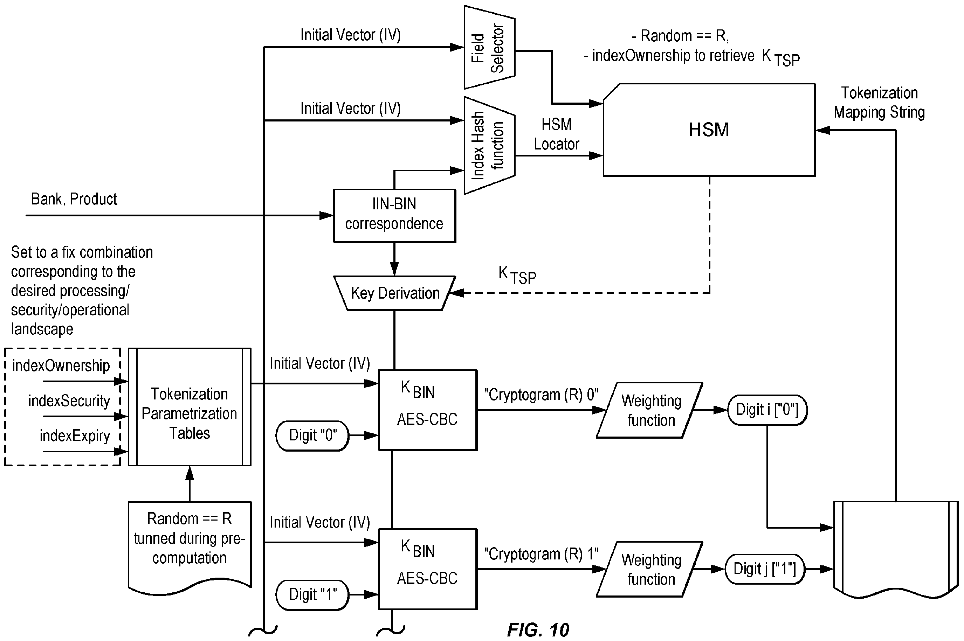

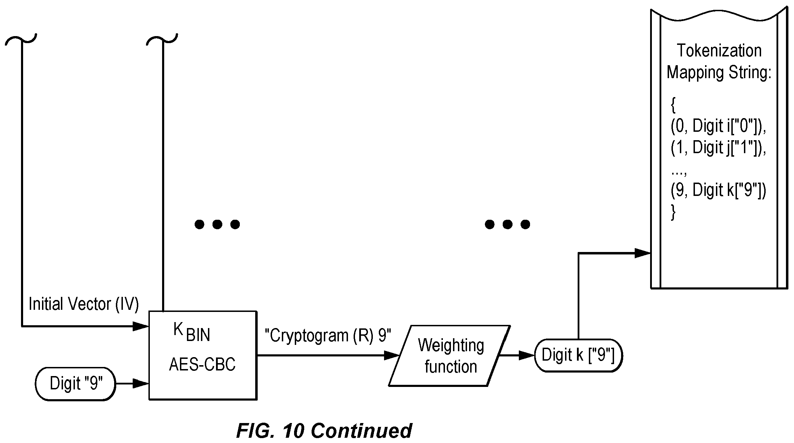

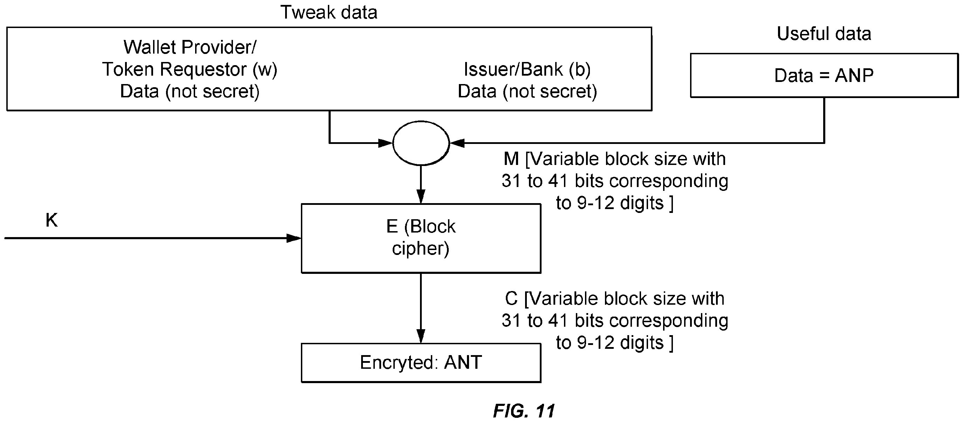

The two exemplary methods for providing a cryptographic mechanism will now be described in detail - the AES-256-CBC approach using pre-computation will be described with reference to Figure 10, and the HPC approach using on-the-fly computation will be described with reference to Figures 11 to 15.

In the first method, FPE parameters are precomputed and stored in the Hardware Security Module (HSM) used by the payment network to store sensitive material. This method therefore provides a trade-off between use of HSM memory space and detokenization time needed at the payment transaction authorization stage. Moreover, it is simple to use and requires no special cryptographic computation. It operates on an input space which simply consists of the decimal digits, namely {0, 1, 2, 3, 4, 5, 6, 7, 8, 9}. Essentially, the method creates an output which is a permutation of these digits, with the specific permutation being determined by the set of parameters used in determining the IV/Spice - this allows the permutation to vary depending on factors such as who is asking for the tokenization, and what kind of device is involved (in particular, what are the security considerations for that device.

The tokenisation process - including its pre-computation stage at the system setup - is initiated when tokenisation is requested for a Wallet Provider (w) and Token Requestor (r) pair - reflecting a valid indexOwnership in the appropriate Token Ownership Table, as discussed above - requires tokenization of all payment cards (i.e., all their PANs) hosting a certain payment card product p of a bank b (here, a specific IIN) for a certain BIN range of the corresponding digital product (according to the IIN-BIN tables as agreed between payment network provider and issuer (see Figure 6). The corresponding Tokens are provided for being provisioned within a category of consumer devices with a security characterization given by the indexSecurity in the Security Score Table. Each PAN's encrypted Token is set in the consumer's device corresponding to their identity. All Tokens are given anexpiration date as indicated in the Expiry Date Table or as computed based on the tokenization date.

The FPE encryption mechanism used as the cryptographic mechanism uses an AES encryption primitive in the CBC-mode. The material needed for the Initial Vector IV is established using the approach indicated above, and involves a combination of tokenization parameters from the tables corresponding to the processing/security/operational configuration desired by the issuer for that token category through the triple (indexOwnership, indexSecurity, indexExpiry) as discussed above. Here, indexSecurity corresponds to the Payment Token Profile indicated as desired by the issuer in a tokenization request for the digital product, as explained above. The IIN-BIN combination is set to the desired card-digital product pairing wished for by the issuer for their customers equipped with that Payment Token Profile. In this way, an Initial Vector as described above is established.

The Initial Vector is then tuned with randomly chosen values (16 bytes) up till the moment we find a random value such that two conditions are fulfilled:

Condition 1: Tokenization Mapping String: {(0, Digit i["0"]), (1, Digit j["1"]),..., (9, Digit k["9"])} is an injective mapping of the input string {0, 1, 2, 3, 4, 5, 6, 7, 8, 9} into itself.
Condition 2: The Tokenization Mapping String does not already exist in the HSM.

This overall process is shown in Figure 10. When the pre-computation method ends-up successfully, the TSP's HSM is securely written with a line corresponding to this parameterization, which includes:

- An HSM Locator Index indicating where the line will be logically written in the HSM, such that it is retrieved during the token payment authorization process for ANT to ANP detokenization;
- The Random value that led to the successful injective mapping; and
- the Tokenization Mapping String that will be used for detokenization/tokenization.

The HSM Locator Index is a collision resistant hash function, such that the index has different values for different entries and there are no collisions that may retrieve the same Tokenization Mapping String for two different processing/-security/operational situations.
The Weighting Function used to establish each digit in the Tokenisation Mapping String is a compression function from a 16-byte binary string to the set {0, 1, 2, 3, 4, 5, 6, 7, 8, 9}, achieved by, for example, adding the bits of the 16-byte binary string and computing a modulo 10 remainder.
The second method, as described with references to Figures 11 to 15, involves on-the-fly detokenization using a "tweakable" block cipher. In the specific embodiment described, the Hasty Pudding Cipher (HPC) is used, but as indicated above, another embodiment could employ a different tweakable block cipher. This approach has an even lower HSM storage demand - there is no need to store Tokenization Mapping Strings - so is appropriate if processing speed is a more available resource than HSM storage.
Referring to Figure 11, this on-the-fly approach requires a cryptographic mechanism (CM) where two parties the owner of the PAN (a bank b) and the consumer wallet provider/token requestor w controlling the Payment Token Profile in the consumer's device - participate with their identities and/or identifiers to determine the Tweak data used along with the Account Number of the PAN (ANP) as input in the block cipher computation output of the Account Number of the Token. These parties must both be able to perform the transformation between the ANT and the ANP in one or the other direction (for detokenization or tokenization).
For a block cipher based approach, the following features are required:

- The output set is equal to the input set (integers X of 9-12 digits in the range [00...00, ..., 99... 99];
- Outputs can be represented as (lg X/lg 2) + 1 bits, i.e., binary strings between 31 and 41 bits, with integer values represented from 31 bits to 41 bits, which means an interval of integer whose binary representation is between $2^{31}$ and $2^{41}$, or whose decimal representation is between($10^9$-1) and ($10^{12}$-1)
- The output structure preserves the structure of the input (format preservation).

This can be implemented as a keyed pseudo-random permutation with preservation of the structure of the output to follow the data schema of the input, i.e., a FPE algorithm with an irregular bit input between 31 bits and 41 bits instead of 16 bytes. This approach requires that the key K must be generated/created by a Trust Service Provider (TSP) trusted by both bank b and wallet provider w. This continues the partnership in security between bank b and wallet provider w extending from their cooperation in tweak data creation - such a TSP may be a service like MDES, typically trusted by both bank and wallet provider.
This mechanism of a tweakable encryption can be considered as analogous to a conventional Cipher Block Chaining mode (CBC mode) block cipher with an Initial Vector (IV) that is "tweakable data" specific to the (b, w) pair - this is the arrangement shown in Figure 11. The tweak data is not secret whereas the key K is secret, while the useful data ANP is encrypted to get ANT of the same format for tokenization.
Still with referring to Figure 11, the tweak data can be considered as a second input to the block cipher beside the useful data, which is ANP. This second input is not secret but performs an inner modification of the permutation used by the block cipher. A desirable property of the tweakable cipher is to have multiple diffusion with propagation of changes - desirably, one bit of change in tweakable data propagates at least three times through the cipher state, changing every bit.

This tweak data hence serves much the same purpose that an Initialization Vector does for the CBC mode of a block cipher (like AES 256), or that a nonce does for the OCB mode, of a block cipher, only that it acts inner to the block permutation structure, modifying it.

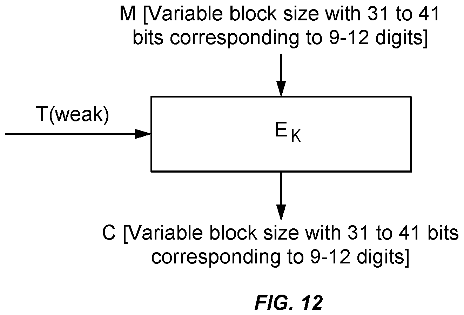

Consequently, one can see the block permutation as being parameterized through the secret key K ($E_K$) and all being "keyed" with the T(weak)/Spice, as illustrated in Figure 12.

Tweakable block ciphers have been known since before AES won the NIST block cipher context - two such ciphers are the Hasty Pudding Cipher (HPC - publicly available at https://en.wikipedia.org/wiki/Hasty_Pudding_cipher) and the Mercy Cipher (developed by Paul Crowley, available at www.ciphergoth.org/crypto/mercy). Both algorithms include an extra input for variability, called in their design specifications a "spice," a "randomizer," or a "diversification parameter." However, these algorithms are just exemplary of the tweakable encryption procedure which when originally introduced was identified as usable with any block cipher at a small extra cost (so, for example, AES could simply be adapted to be tweakable).

HPC is however the choice for the embodiment discussed below, as it is particularly suitable for this purpose. In particular, HPC is very suitable for encrypting strings of arbitrary length into outputs of the same length - here, the need is for this to be used over a 31-41 bit range. HPC can easily be used adaptively with different block size ranges, which is significant here as ANP and ANT may vary between 9 and 12 digits:

  ○ **tiny:** <=35 bits -- for Account Numbers of PAN on:

  - 31 bits, when the BIN Ranges are up till 8 digits,
  - 34 bits, when the BIN Ranges are up till 7 digits.

  ○ **short:** 36-64 bits -- for Account Number of PAN on:

  - 37 bits, when the BIN Ranges are up till 6 digits,
  - 41 bits, when the BIN Ranges are up till 5 digits.

HPC is also believed to be resistant to quantum computing attacks, and so can be considered a Post Quantum (PQ) cryptographic algorithm.

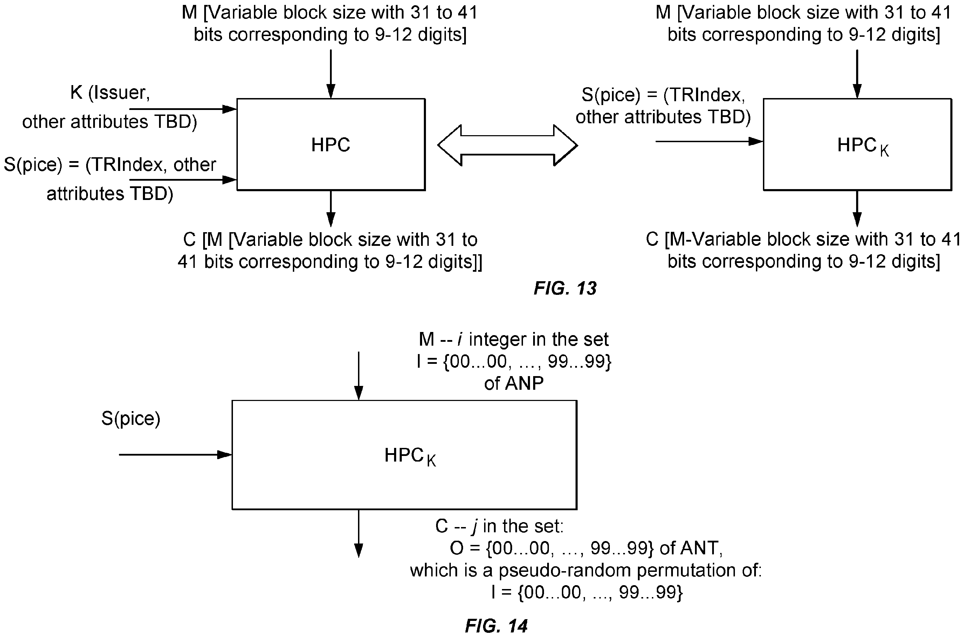

For convenience, $HPC_K$ will be used for a version of HPC keyed by key K - this can therefore be considered to have input M (of variable block size, between 31 and 41 bits corresponding to 9-12 digits of an Account Number), spice S (as described above) and with output C (of the same block size and with a binary representation on the same number of bits as the input, or the same number of digits as M, if the representation is decimal). The alternative representations of HPC with key input K, and of $HPC_K$, are shown in Figure 13. The effect of the spice S is to increase the entropy of the cryptographic computation.

Use of detokenization tables in token vaults is problematic for a number of reasons. In addition to the complexity introduced for all parties by having any additional look-up step, it may be necessary for speed or for local regulations to have the detokenization tables in geographies where transactions are taking place - which may require detokenization table information to be migrated from one geography to another, which creates synchronisation issues when a backup is required or when multiple parties can update token status. These problems can be avoided with a tokenization/detokenization method that allows a consumer device hosting a wallet to keep its own Token-PAN detokenization relationship specifically encrypted in the publicly readable records of the mobile app (for example, as indicated by the Application File Locator (AFL) field in EMV). In this method, CDA (Combined-with-AC-Computation Dynamic Authentication) used to authenticate information in a transaction will use for the Token certificate, wherein the Token corresponds to the PAN in the FPE specially encrypted format as described above, which will be also included in DE2 of the authorization message provided for the purpose of authorization by the issuer. The digital app in the device will sign the CDA data with the private key corresponding to that certified public key linked to the Token and not to the PAN. When the terminal verifies the CDA on the transaction data and on the AC included in the data to be signed, it has no idea that it verifies with respect to a token that encrypts the PAN but not with respect to the PAN certificate itself.

An effective strategy here is to use for spice information supplementary material that can be provided as authenticated but which is not necessarily encrypted during the transaction process. Such material can be the PAN Sequence Number (PSN) and the bank/wallet pair (b, w) - an exemplary set of spice material is provided further below. Such material for an EMV-type mobile app can be encoded in the mobile app within the FCI Issuer Discretionary Data (IDD) field with tag BF0C during personalization - this is provided back to /TSPMDES during transaction processing in File Control Information (tag 6F) for a contactless transaction or in a UCAF payload for a digital transaction (UCAF is a format used for carrying data for digital transactions as card-not-present in e-commerce). This will serve in the decryption of the Token back into a PAN. The spice information is therefore not kept secret, but it is set at personalization time and only the issuer (or a party acting for the issuer such as the MDES here) knows its purpose. Here, MDES knows what items may be added to the Spice for deciphering the Token in the PAN, and it also knows that those items are authentic, as computed by itself and that they did not change since they were personalized/added in the digital card in tag BF0C.

An exemplary tokenization process using $HPC_K$ is shown in Figure 14. This shows how for a given spice S = (PSN, ( b, w)), formed as explained above, and a secret key K, the double-parameterized algorithm $HPC^S_K$ computes the pseudo-random permutation of each integer in the range: [00...00, ... , 99...99] of any Account Number corresponding to a given Issuer Identification Number (IIN) of a PAN family - ANP -- for a given PSN and for a certain type of card product with a wallet provider (b,w). The output j which is also an integer in the range: [00 ... 00, ..., 99...99] - representing the Account Number of the Token, or ANT - is computed according to the following formula:

$$\text{ANT} = \text{Tweakable Block Cipher } \{K\} [S = (\text{PSN}, (\text{Bank } b, \text{Wallet } w))] (\text{ANP}),$$

i.e., when the tweakable block cipher is HPC then it becomes:

$$\text{ANT} = HPC_K^S[\text{ANP}],$$

wherein the algorithm is shown as being with double parametrization: K as key (first parameter in subscript) and S as the Spice (second parameter in superscript).

This further reads as the tiny/small block encryption mode with key K of HPC on the input ANP for a given spice S formed as (PSN, pair (b,w)) as a shorten spice (the shorter the spice the smaller the encryption/decryption time). The separate elements are identified or determined as follows:

j = ANT output of the 9-12 digits of the encrypted ANP. ANP is transformed (along with other elements as indicated above) into a Token capable of performing switching for the transaction, in the set O = {00..00, ...,99..99}, corresponding to an input digit i in the same set I = {00..00, ...,99..99} of ANP that can be entered (together with the other aforementioned digits) in a plaintext PAN to respect the Field Preserving Encryption (FPE) requirement.

K = the encryption key may be computed as:

K = Derivation_Function {KSystem}[Bank b's IIN-BIN relationship]. Approaches that can be used for a Derivation_Function are not discussed herein in detaillt should be noted that an example was briefly explained above, which is only exemplary and that other conventional approaches to providing a Derivation Function can be used.

S = HPC's spice, which is computed here (in exemplary form) as a concatenation of the card's PSN, Bank's b ID (CID), Wallet w's ID (WID), Token Requestor ID (TRID, the party on who's behalf WID is asking for digitization), IIN for the PANs to be tokenized, and a randomizer for injectivity, along with the PAN Expiration Date and PAN Sequence Number (PSN). This material can be provided as authenticated in the transaction but is not provided in encrypted form.

Using this approach, it is desirable to use the shortest S that provides an effective and secure result, as shortening S will shorten computation time, and hence tokenization and detokenization time.

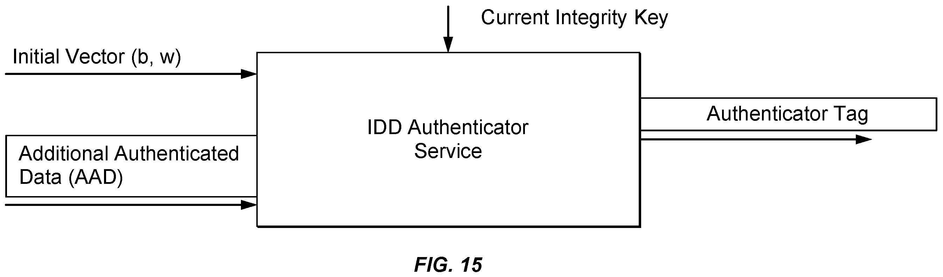

An approach to providing spice data for detokenization is illustrated in Figure 15. This relies on the availability of the Issuer Discretionary Data (IDD) in the Token's FCI personalization data, and involves the use of an IDD Authenticator Service. This may be provided as a new service on the TSP's TMS. It consists of an AES-256 in GCM mode - the encrypted result that this produces is not used, but the Authenticator Tag resulting must be included in the FC's IDD personalization.

As previously described, the (b, w) pair is part of the information needed. b = identity of the Bank that owns the token/PAN - this will be known to the transaction scheme in providing a card PAN of a certain type (e.g., credit, debit, pre-paid) using an "IIN range" (IIN = Issuer Identification Number, usually of 5 digits, also known as a BIN = Bank Identification Number), w = Wallet Provider (WID)/Token Requestor (TRID) that manages the transferred token for its consumer, which is also known information to the transaction scheme.

The other information provided is the Additional Authenticated Data (AAD), which may include any of the following (and potentially other information of a similar type):

- ANT=E(ANP) - the implicit token-PAN mapping through tweakable encryption (ANT part of the Token).
- PAN Sequence Number
- Data about the mobile platform where the Token is hosted (for example, Security Technology Index (SE, TEE, REE, HCE), pointing to the appropriate Payment Token Profile).
- Expiration Date Index.

This information is used to generate an Authenticity Tag (AUT) - this is verified by the TSP when decrypting a mapping. The generation process uses a Current Integrity Key (CIK) for authentication and integrity. This can be provided by standard methods, for example:

- either derived from a system key for integrity and authentication, based on the PAN.

- or which can be provided by a key management network, e.g., selected pseudo-randomly from a key set specific to a device-TSP channel.

In this way, both tokenization and detokenization processes can take place where required without the need for detokenization tables.

As the skilled person will appreciate, other embodiments of the disclosure can be developed using other approaches to format preserving encryption, both using pre-computation and computation on-the-fly, without departing from the spirit and scope of this disclosure.

**Claims**

1. A computer-implemented method for tokenization, comprising a suitable programmed computing system:

   receiving a sensitive datum to be tokenized;
   receiving or recovering a set of parameters relating to the sensitive datum to be tokenized; and
   encrypting the sensitive datum and the set of parameters using a field preserving encryption technique to provide a token, wherein the token has the same format as the sensitive datum.

2. The computer-implemented method of claim 1, wherein the field preserving encryption technique is adapted to map a first range of numbers pseudo-randomly on to a second range of numbers.

3. The computer-implemented method of claim 1 or claim 2, wherein the field preserving encryption technique uses a block cipher using a cryptographic key and a vector derived from the set of parameters.

4. The computer-implemented method of any preceding claim, wherein the tokenization method is for providing tokens for use in digitized transactions, and wherein the method further comprises provisioning the token to a consumer computing device.

5. A computer-implemented method for detokenization, comprising a suitable programmed computing system:

   receiving a token to be detokenized;
   recovering a set of parameters relating to the token to be detokenized; and
   decrypting a sensitive datum from the token and the set of parameters using a field preserving encryption technique, wherein the token has the same format as the sensitive datum.

6. The computer-implemented method of claim 5, wherein the field preserving encryption technique is adapted to map a first range of numbers pseudo-randomly on to a second range of numbers.

7. The computer-implemented method of claim 5 or claim 6, wherein the field preserving encryption technique uses a block cipher using a cryptographic key and a vector derived from the set of parameters.

8. The computer implemented method of any of claims 5 to 7, wherein the field preserving encryption technique involves precomputing intermediate results for use in encrypting the sensitive datum.

9. The computer-implemented method of claim 8 where dependent on claim 7, wherein the block cipher operates in cipher block chaining mode and wherein the vector is an initialization vector.

10. The computer-implemented method of any of claims 5 to 7, wherein the field preserving encryption technique is only carried out when a token is received for detokenization.

11. The computer-implemented method of claim 10 where dependent on claim 7, wherein the block cipher is a tweakable block cipher and wherein the vector is a tweak for the tweakable block cipher.

12. The computer-implemented method of any of claims 5 to 11, wherein the detokenization method is detokenizing tokens used in digitized transactions to recover account information for use in authorising the transaction.

13. The computer implemented method of claim 12 where dependent on claim 10 or claim 11, wherein the set of parameters comprise one or more of ownership parameters, security parameters, and expiry parameters, and wherein the set of parameters comprises parameters guaranteed but not encrypted by a user computing device in performance of a digital transaction.

14. The computer implemented method of claim 13, wherein the method further comprises a guarantor service guaranteeing at least a part of the set of parameters before their use by the field preserving encryption technique.

15. A computer system having a processor programmed to perform the method of detokenisation of any of claims 5 to 14.

FIG. 1

FIG. 2

*FIG. 3*

FIG. 4

*FIG. 5*

Digit1:5 → 2

CARD
ISSUER IDENTIFICATION NUMBER

Search Token's BIN in the
IIN - BIN mapping table of PAN-Token

| Card II N (digits 2-6) | Token BIN (digits 2-6) |
|---|---|
| $IIN_1$ $\longrightarrow$ | $BIN_1$ |
| $IIN_2$ $\longrightarrow$ | $BIN_2$ |
| $IIN_{Bank\ b}$ | $BIN_{Bank\ b}$ |
| $IIN_{n-1}$ $\longrightarrow$ | $BIN_{n-1}$ |
| $IIN_n$ $\longrightarrow$ | $BIN_n$ |

Credit *Card*    BANK

5141  5926  5358  9793
06/15

YOUR ACCOUNT NUMBER

Payment
Network
Discriminator

(ANP)    CHECK DIGIT

PAN of Bank b
(identified with II N)

| 2 (1 digit) | Bank Identification Number (5 digits) | Pseudo-randomly allocated Account Number: (9-12 digits) | Luhn Digit (1 digit) |

(ANT)

Token PAN of Bank b (identified with IIN's
equivalent BIN) and with wallet provider (WP)

Allotting of a 9-12 digits at random from a Token Pool into the Token's
Account Number (ANT) such that this randomly allocated number was
never mapped yet against any already mapped PAN's Account Number --
ANP (also of 9-12 digits). This is kept through a Detokenization Table in
a so-called Token Vault.

*FIG. 6*

EP 4 521 283 A1

## Tokenization Parametrization Tables

indexOwnership →

**Token Ownership Table**

{Wallet Provider, Token REquestor}

Storage = {Wallet App, CVM App, Payment app, CVM environment}

indexSecurity →

**Security Score Table**

Interaction = {Face-to-face Remote, contactless, QR code}

Payment Technology = {MCM, MCBP, MTBP, Etc.}

indexExpiry →

**Expiry Date Table**

{monthExpiry, yearExpiry}

random →

Initial Vector at high cipher level (a), or Tweak/Spice at lower block cipher level (b)

→ IV/Spice

*FIG. 7*

{MCM1.0; MCM1.1; MCBP1.0; MCBP1.1; MCBP2.0; MTBP}

Token Cryptogram Type (TCT)

{eSE; REE; TEE; CLOUD}

Token Storage Type (TST)

Payment Token Profile

Consumer Token Profile

RT1

RT2

RT2

{RP; CL; MS; MST}

{Management Interface; WSP interface}

Consumer Interfaces

Payment Interfaces

RT3

{MC; DMC; MAS}

Brands

FIG. 8

*FIG. 9*

FIG. 10

FIG. 10 Continued

Initial Vector (IV)

Digit "9"

$K_{BIN}$
AES-CBC

"Cryptogram (R) 9"

Weighting function

Digit k ["9"]

Tokenization Mapping String:

{
(0, Digit i["0"]),
(1, Digit j["1"]),
...,
(9, Digit k["9"])
}

EP 4 521 283 A1

FIG. 11

EP 4 521 283 A1

M [Variable block size with 31 to 41
bits corresponding to 9-12 digits]

T(weak) → $E_K$

C [Variable block size with 31 to 41 bits
corresponding to 9-12 digits]

*FIG. 12*

M [Variable block size with 31 to 41 bits corresponding to 9-12 digits]

K (Issuer, other attributes TBD)

S(pice) = (TRIndex, other attributes TBD)

HPC

C [M [Variable block size with 31 to 41 bits corresponding to 9-12 digits]]

M [Variable block size with 31 to 41 bits corresponding to 9-12 digits]

S(pice) = (TRIndex, other attributes TBD)

$HPC_K$

C [M-Variable block size with 31 to 41 bits corresponding to 9-12 digits]

*FIG. 13*

M -- $i$ integer in the set
I = {00...00, ..., 99...99}
of ANP

$HPC_K$

S(pice)

C -- $j$ in the set:
O = {00...00, ..., 99...99} of ANT,
which is a pseudo-random permutation of:
I = {00...00, ..., 99...99}

*FIG. 14*

Current Integrity Key

Initial Vector (b, w)

IDD Authenticator
Service

Authenticator Tag

Additional Authenticated
Data (AAD)

**FIG. 15**

Europäisches
Patentamt

European
Patent Office

Office européen
des brevets

# EUROPEAN SEARCH REPORT

Application Number

**EP 23 19 5829**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/358163 A1 (KUMAR SHARATH LAKSHMAN [IN] ET AL) 8 December 2016 (2016-12-08) <br> * abstract * <br> * paragraph [0018] - paragraph [0056] * <br> * figures 1, 3-6 * | 1-15 | INV. <br> G06F21/62 |
| X | US 2017/214521 A1 (BUSCH CHRISTOPHER GERHARD [US]) 27 July 2017 (2017-07-27) <br> * abstract * <br> * paragraph [0027] - paragraph [0041] * <br> * paragraph [0055] - paragraph [0117] * <br> * claim 11 * <br> * figures 1, 3A, 3B, 3C, 4A, 4B, 5 * | 1-15 | |
| X | US 2016/019396 A1 (DAVIS MARK H [US] ET AL) 21 January 2016 (2016-01-21) <br> * abstract * <br> * paragraph [0026] - paragraph [0057] * <br> * figures 2-6 * | 1-15 | |

TECHNICAL FIELDS
SEARCHED (IPC)

G06F

The present search report has been drawn up for all claims

| Place of search | Date of completion of the search | Examiner |
|---|---|---|
| Munich | 21 December 2023 | Bae, Jun-Young |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 5829

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2023

| Patent document cited in search report | | Publication date | Patent family member(s) | | Publication date |
|---|---|---|---|---|---|
| US 2016358163 | A1 | 08-12-2016 | NONE | | |
| US 2017214521 | A1 | 27-07-2017 | US 2017214521 A1 | | 27-07-2017 |
| | | | US 2018053008 A1 | | 22-02-2018 |
| US 2016019396 | A1 | 21-01-2016 | US 2016019396 A1 | | 21-01-2016 |
| | | | US 2016380998 A1 | | 29-12-2016 |
| | | | WO 2016014152 A1 | | 28-01-2016 |

EPO FORM P0459

For more details about this annex : see Official Journal of the European Patent Office, No. 12/82